# EUROPEAN PATENT APPLICATION

(11) **EP 1 359 338 A2**
(43) Date of publication of application: **05.11.2003**
(21) Application number: 03076073.0
(22) Date of filing: 14.04.2003
(51) Int. Cl.: F16D 65/21

(54) **Gear-driven electric mechanical brake-assembly and motor subassembly therefor**

(30) Priority: 02.05.2002 US 137501
(71) Applicant: Delphi Technologies, Inc., Troy, MI 48007 (US)
(72) Inventor: Drennen, David B., Bellbrook, OH 45305 (US)
(74) Representative: Denton, Michael John

(57) **Abstract**

An electric mechanical brake assembly (10) includes a brake caliper housing (12), a ballscrew subassembly (14) at least partially located within the housing, first and second electric motors (16 and 18), and at least three gears (20-28). A linearly-movable member (32) of the ballscrew subassembly is attachable to a brake pad (34) and is driven by a rotatable actuation shaft (30) of the ballscrew subassembly. The gears operatively connect the drive shafts of the electric motors to the actuation shaft of the ballscrew subassembly. An electric-mechanical-brake motor subassembly (40) includes first and second electric motors, a motor plate (42), and at least three gears. The electric motors are attached to the motor plate, and the motor plate is attachable to a brake caliper housing. The gears arc operatively connectable to the motor drive shafts and to a rotatable actuation shaft, of a ballscrew subassembly at least partially located within the housing, for the drive shafts to rotate the actuation shaft.

## Description

### TECHNICAL FIELD

The present invention relates generally to brakes, and more particularly to an electric mechanical brake assembly.

### BACKGROUND OF THE INVENTION

Conventional electric mechanical brakes, also known as electric brake calipers, utilize an electric motor positioned outside the caliper housing to drive an inline rotatable ballscrew of a ballscrew subassembly positioned within the caliper housing. The rotating ballscrew linearly moves a ballnut of the ballscrew subassembly. The ballnut is connected to, and linearly moves, an inner brake pad against a brake rotor of a vehicle. An outer brake pad, mounted to the caliper housing, is positioned on an opposite side of the brake rotor. Therefore, during braking, the inner brake pad will be forced against the rotor and a resulting reactionary force will pull the outer brake pad into engagement with the opposite side of the rotor. Engagement of the inner and outer brake pads with the rotor will slow and stop the vehicle or hold a stopped vehicle in a fixed position.

What is needed is an improved electric mechanical brake.

### SUMMARY OF THE INVENTION

A first expression of an embodiment of the invention is for an electric mechanical brake assembly including an electric-mechanical-brake-caliper housing, an electric-mechanical-brake ballscrew subassembly, first and second electric motors, and at least three gears. The ballscrew subassembly is at least partially located within the housing, has a rotatable actuation shaft, and has a linearly-movable member which is driven by the actuation shaft and which is attachable to a brake pad. The first electric motor has a first drive shaft, and the second electric motor has a second drive shaft. The at-least-three gears operatively connect the first and second drive shafts to the actuation shaft.

A second expression of an embodiment of the invention is for an electric-mechanical-brake motor subassembly including electro-mechanical brake first and second electric motors, a motor plate, and at least three gears. The first electric motor has a first drive shaft, and the second electric motor has a second drive shaft. The first and second electric motors are attached to the motor plate, and the motor plate is attachable to an electric-mechanical-brake-caliper housing. The at-least-three gears are operatively connectable to the first and second drive shafts and to a rotatable actuation shaft, of an electric-mechanical-brake ballscrew subassembly at least partially located within the housing, for the first and second drive shafts to rotate the actuation shaft.

Several benefits and advantages are derived from one or more of the expressions of an embodiment of the invention. Having at least two electric motors allows, in one example of the embodiment of the invention, for the motors to be located at least partially within the electric-mechanical-brake-caliper housing alongside the electric-mechanical-brake ballscrew subassembly. This provides for a more compact electric mechanical brake design and/or allows two or more smaller-diameter motors to replace the torque output of the conventional larger-diameter single motor. Smaller diameter motors have lower inertia than larger-diameter motors of the same type and provide faster motor reversals which are desirable for certain braking applications such as anti-lock-braking systems.

### SUMMARY OF THE DRAWINGS

Figure 1 is a schematic top planar view of an embodiment of the invention showing an electric mechanical brake assembly with a portion of the electric-mechanical-brake-caliper housing cut-away exposing internal components;
Figure 2 is a view of the electric mechanical brake assembly of Figure 1 taken along lines 2-2 of Figure 1; and
Figure 3 is a schematic top planar view of the electric-mechanical-brake motor subassembly of the electric mechanical brake assembly of Figure 1 with the gears removed.

### DESCRIPTION OF THE PREFERRED EMBODIMENTS

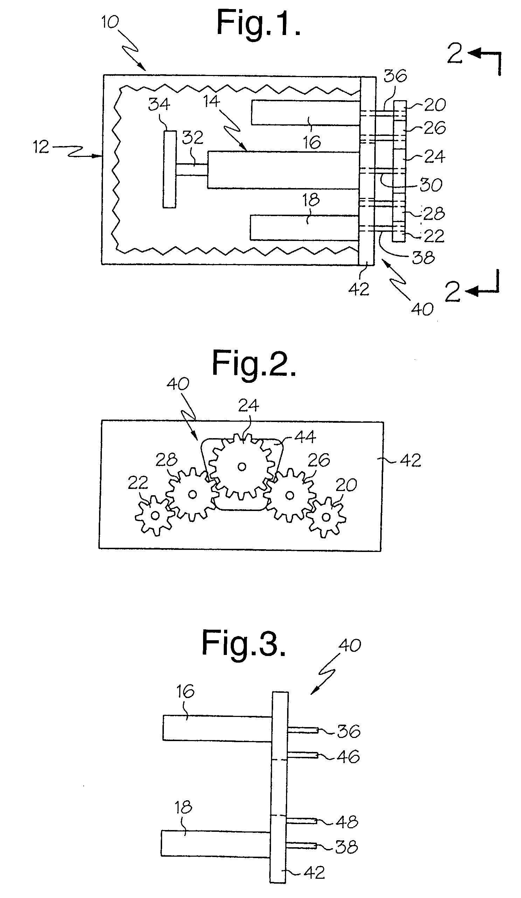

Referring now to the drawings, Figures 1 - 3 illustrate an embodiment of the present invention. A first expression of the embodiment shown in the figures is for an electric mechanical brake assembly 10 including an electric-mechanical-brake-caliper housing 12, an electric-mechanical-brake ballscrew subassembly 14, first and second electric motors 16 and 18, and at least three gears 20-28. The ballscrew subassembly 14 is at least partially disposed within the housing 12, has a rotatable actuation shaft 30, and has a linearly-movable member 32 which is driven by the actuation shaft 30 and which is attachable to a brake pad 34. The first electric motor 16 has a first drive shaft 36, and the second electric motor 18 has a second drive shaft 38. The at-least-three gears 20-28 operatively connect the first and second drive shafts 36 and 38 of the first and second electric motors 16 and 18 to the actuation shaft 30 of the ballscrew subassembly 14.

In one application, the brake pad 34 is a vehicle brake pad. In one implementation, the vehicle brake pad is an inner brake pad of an automotive vehicle. The operation of an electric-mechanical-brake ballscrew subassembly to move a brake pad in an electric-mechanical-brake-caliper housing of a motor vehicle is well known. In one design, the actuation member 30 includes a ballscrew and the linearly-movable member 32 includes a ballnut. Other applications (including non-vehicle applications), other implementations, and other ballscrew subassembly designs are left to the artisan. It is noted that the terminology "ballscrew subassembly" includes all mechanical motion transfer devices which transfer rotation of a rotatable actuation shaft into linear movement of a linearly-movable member, as can be appreciated by those skilled in the art.

In one example of the first expression of the embodiment shown in the figures, the first and second drive shafts 36 and 38 of the first and second electric motors 16 and 18 are substantially parallel to the actuation shaft 30 of the ballscrew subassembly 14. In the same or a different example, the first and second electric motors 16 and 18 are shorter in axial length than the ballscrew subassembly 14. In the same or a different example, the first and second electric motors 16 and 18 are at least partially disposed (and in one variation are substantially completely disposed except for their drive shafts 36 and 38) within the housing 12 and are disposed alongside the ballscrew subassembly 14 (meaning that the electric motors 16 and 18 axially overlap the ballscrew subassembly 14).

In one arrangement, gear 20 is attached to the first drive shaft 36 of the first electric motor 16, gear 22 is attached to the second drive shaft 38 of the second electric motor 18, and gear 24 is attached to the actuation shaft 30 of the ballscrew subassembly 14. Gear 26 is an idler gear operatively connecting gear 20 and gear 24, and gear 28 is an idler gear operatively connecting gear 22 and gear 24. Other gear arrangements are left to the artisan.

A second expression of the embodiment shown in the figures is for an electric-mechanical-brake motor subassembly 40 including electric-mechanical-brake first and second electric motors 16 and 18, a motor plate 42, and at least three gears 20-28. The first electric motor 16 has a first drive shaft 36, and the second electric motor 18 has a second drive shaft 38. The first and second electric motors 16 and 18 are attached to the motor plate 42, and the motor plate 42 is attachable to an electric-mechanical-brake-caliper housing 12. The at-least-three gears 20-28 are operatively connectable to the first and second drive shafts 36 and 38 of the first and second electric motors 16 and 18 and to a rotatable actuation shaft 30, of an electric-mechanical-brake ballscrew subassembly 14 at least partially disposed within the housing 12, for the first and second drive shafts 36 and 38 to rotate the actuation shaft 30.

In one example of the second expression of the embodiment shown in the figures, when the motor plate 42 is attached to the housing 12, the first and second drive shafts 36 and 38 of the first and second electric motors 16 and 18 are substantially parallel to the actuation shaft 30 of the ballscrew subassembly 14. In the same or a different example, the first and second electric motors 16 and 18 are shorter in axial length than the ballscrew subassembly 14. In the same or a different example, when the motor plate 42 is attached to the housing 12, the first and second electric motors 16 and 18 are at least partially disposed (and in one variation are substantially completely disposed except for their drive shafts 36 and 38) within the housing 12 and are disposed alongside the ballscrew subassembly 14 (meaning that the electric motors 16 and 18 axially overlap the ballscrew subassembly 14).

In one illustration of the second expression of the embodiment shown in the figures, the motor plate 42 becomes a housing cover when attached to the housing 12. In one variation, the motor plate 42 has an opening 44 to allow passage therethrough of the actuation shaft 30 of the ballscrew subassembly 14 so that the gear 24 can be attached to the actuation shaft 30. In one modification, idler shafts 46 and 48 are rotatably attached to the motor plate 42, wherein gear 26 is attached to idler shaft 46 and gear 28 is attached to idler shaft 48.

Several benefits and advantages are derived from one or more of the expressions of an embodiment of the invention. Having at least two electric motors allows, in one example of the embodiment of the invention, for the motors to be located at least partially within the electric-mechanical-brake-caliper housing alongside the electric-mechanical-brake ballscrew subassembly. This provides for a more compact electric mechanical brake design and/or allows two or more smaller-diameter motors to replace the torque output of the conventional larger-diameter single motor. Smaller diameter motors have lower inertia than larger-diameter motors of the same type and provide faster motor reversals which are desirable for certain braking applications such as anti-lock-braking systems.

The foregoing description of several expressions of an embodiment of the invention has been presented for purposes of illustration. It is not intended to be exhaustive or to limit the invention to the precise form disclosed, and obviously many modifications and variations are possible in light of the above teaching. It is intended that the scope of the invention be defined by the claims appended hereto.

## Claims

1. An electric mechanical brake assembly (10) comprising:
a) an electric-mechanical-brake-caliper housing (12);
b) an electric-mechanical-brake ballscrew subassembly (14) at least partially disposed within the housing, having a rotatable actuation shaft (30), and having a linearly-movable member (32) which is driven by the actuation shaft and which is attachable to a brake pad (34);
c) a first electric motor (16) having a first drive shaft (36);
d) a second electric motor (18) having a second drive shaft (38); and
e) at least three gears (20-28) operatively connecting the first and second drive shafts to the actuation shaft.

2. The electric mechanical brake assembly of claim 1, wherein the first and second drive shafts are substantially parallel to the actuation shaft.

3. The electric mechanical brake assembly of claim 2, wherein the first and second electric motors are shorter in axial length than the ballscrew subassembly.

4. The electric mechanical brake assembly of claim 2, wherein the first and second electric motors are at least partially disposed within the housing and are disposed alongside the ballscrew subassembly.

5. The electric mechanical brake assembly of claim 1, wherein the first and second electric motors are shorter in axial length than the ballscrew subassembly.

6. The electric mechanical brake assembly of claim 5, wherein the first and second electric motors are at least partially disposed within the housing and are disposed alongside the ballscrew subassembly.

7. The electric mechanical brake assembly of claim 1, wherein the first and second electric motors are at least partially disposed within the housing and are disposed alongside the ballscrew subassembly.

8. An electric mechanical brake assembly (10) comprising:
a) an electric-mechanical-brake-caliper housing (12) ;
b) an electric-mechanical-brake ballscrew subassembly (14) at least partially disposed within the housing, having a rotatable actuation shaft (30), and having a linearly-movable member (32) which is driven by the actuation shaft and which is attachable to a brake pad (34);
c) a first electric motor (16) having a first drive shaft (36);
d) a second electric motor (18) having a second drive shaft (38); and
e) at least three gears (20-28) operatively connecting the first and second drive shafts to the actuation shaft,
wherein the first and second drive shafts are substantially parallel to the actuation shaft,
wherein the first and second electric motors are shorter in axial length than the ballscrew subassembly, and
wherein the first and second electric motors are at least partially disposed within the housing and are completely disposed alongside the ballscrew subassembly.

9. An electric-mechanical-brake motor subassembly (40) comprising:
a) an electric-mechanical-brake first electric motor (16) having a first drive shaft (36);
b) an electric-mechanical-brake second electric motor (18) having a second drive shaft (38);
c) a motor plate (42), wherein the first and second electric motors are attached to the motor plate, and wherein the motor plate is attachable to an electric-mechanical-brake-caliper housing (12); and
d) at least three gears (20-28) operatively connectable to the first and second drive shafts and to a rotatable actuation shaft (30), of an electric-mechanical-brake ballscrew subassembly (14) at least partially disposed within the housing, for the first and second drive shafts to rotate the actuation shaft.

10. The electric-mechanical-brake motor subassembly of claim 9, wherein, when the motor plate is attached to the housing, the first and second drive shafts are substantially parallel to the actuation shaft.

11. The electric-mechanical-brake motor subassembly of claim 10, wherein the first and second electric motors are shorter in axial length than the ballscrew subassembly.

12. The electric-mechanical-brake motor subassembly of claim 10, wherein, when the motor plate is attached to the housing, the first and second electric motors are at least partially disposed within the housing and are disposed alongside the ballscrew subassembly.

13. The electric-mechanical-brake motor subassembly of claim 9, wherein the first and second electric motors are shorter in axial length than the ballscrew subassembly.

14. The electric-mechanical-brake motor subassembly of claim 13, wherein, when the motor plate is attached to the housing, the first and second electric motors are at least partially disposed within the housing and are disposed alongside the ballscrew subassembly.

15. The electric-mechanical-brake motor subassembly of claim 9, wherein, when the motor plate is attached to the housing, the first and second electric motors are at least partially disposed within the housing and are disposed alongside the ballscrew subassembly.

16. An electric-mechanical-brake motor subassembly (40) comprising:
a) an electric-mechanical-brake first electric motor (16) having a first drive shaft (36);
b) an electric-mechanical-brake second electric motor (18) having a second drive shaft (38);
c) a motor plate (42), wherein the first and second electric motors are attached to the motor plate, and wherein the motor plate is attachable to an electric-mechanical-brake-caliper housing (12); and
d) at least three gears (20-28) operatively connectable to the first and second drive shafts and to a rotatable actuation shaft, of an electric-mechanical-brake ballscrew subassembly (14) at least partially disposed within the housing, for the first and second drive shafts to rotate the actuation shaft,
wherein, when the motor plate is attached to the housing, the first and second drive shafts are substantially parallel to the actuation shaft,
wherein the first and second electric motors are shorter in axial length than the ballscrew subassembly, and
wherein, when the motor plate is attached to the housing, the first and second electric motors are at least partially disposed within the housing and are completely disposed alongside the ballscrew subassembly.
